# EUROPÄISCHE PATENTSCHRIFT

(11) **EP 0 449 906 B1**
(45) Veröffentlichungstag und Bekanntmachung des Hinweises auf die Patenterteilung: **26.05.1993**
(21) Anmeldenummer: 90900801.3
(22) Anmeldetag: 05.12.1989
(51) Int. Cl.: F16D 1/08, F16D 3/06

(54) **ZAHNWELLENVERBINDUNG**
SHAFT SPLINE CONNECTION
RACCORD D'ARBRES CANNELES

(30) Priorität: 10.12.1988 DE 3841703
(43) Veröffentlichungstag der Anmeldung: 09.10.1991
(73) Patentinhaber: ZF FRIEDRICHSHAFEN Aktiengesellschaft, 88038 Friedrichshafen (DE)
(72) Erfinder: SOMMER, Rudolf, D-7070 Schwäbisch Gmünd (DE)
(86) Internationale Anmeldenummer: EP8901484
(87) Internationale Veröffentlichungsnummer: WO9006450

(56) Entgegenhaltungen:
- EP-A- 0 131 496
- CH-A- 401 600
- DE-C- 20 665
- DE-U- 8 524 285
- FR-A-14 932 35
- US-A- 1 905 431
- US-A- 3 826 108
- US-A- 3 862 814

## Beschreibung

Die Erfindung betrifft eine Zahnverbindung mit Preßpassung zwischen einer Welle und einer Nabe mit einer Vielzahl von Zähnen, die an der Außen-Umfangsfläche der Welle und der Innen-Umfangsfläche der Nabe ausgebildet sind.

Bei bekannten derartigen Zahnverbindungen sind die Zahnflanken der Zähne von Welle und Nabe im Eingriffsbereich jeweils äquidistant oder nahezu äquidistant zueinander ausgeführt (DIN 5480). Dabei sind die Zahnflanken im Querschnitt beispielsweise geradlinig oder evolventenförmig ausgebildet.

Wird eine derartige Zahnverbindung in einer Preßverbindung angewendet, so kann infolge der üblichen Verzahnungsabweichungen keine gleichmäßige Pressung erzielt werden. Vielmehr treten in den Toleranzgrenzbereichen Spiel oder zu hohe Pressung auf. Bei zuviel Spiel zwischen den Verzahnungen von Welle und Nabe bildet sich "Passungsrost", die Verbindung lockert sich. Bei zuwenig Spiel, d. h. bei zu großer Pressung, wird die Nabe örtlich überdehnt. Dies führt beispielsweise bei der Anwendung der Zahnverbindung für eine Befestigung eines Synchronkörpers auf einer Welle eines Fahrzeug-Schaltgetriebes dadurch zu Schwierigkeiten, daß die Verbindung zu locker ist oder die Synchronkörper-Außenverzahnung aufgeweitet und - je nach Querschnitt - zum Teil auch unrund wird, was die Getriebemontage und die Funktion sehr erschwert bzw. verschlechtert.

Der Erfindung liegt die Aufgabe zugrunde, die Mitnahmegenauigkeit einer bekannten Zahnverbindung zu verbessern, ohne dabei jedoch die Fertigungstoleranzen einzuengen.

Diese Aufgabe wird durch die im Anspruch 1 gekennzeichnete Zahnverbindung dadurch gelöst, daß die Zahnflanken der Zähne von Welle und Nabe derart unterschiedlich gekrümmt sind, daß sie - bezogen auf eine Schnittebene senkrecht zur Achse von Welle und Nabe - nur in einem Berührpunkt bzw. nur in einer bei der Pressung durch Abplattung entstehenden Berührfläche aneinander anliegen und ansonsten die Zahnflanken der Zähne der Welle zu den Zahnflanken der Zähne der Nabe über die Zahnhöhe unterschiedliche Abstände aufweisen. Zweckmäßige und vorteilhafte Ausgestaltungen sind in den Unteransprüchen angegeben.

Durch die erfindungsgemäße Ausbildung der Zahnflanken kann die Flankenpressung durch entsprechende Auswahl der Größe und Festlegung der Lage der Flankenkrümmung und durch entsprechende Werkstoffauswahl derart günstig beeinflußt werden, daß Flankenformabweichungen unschädlich und Flankenrichtungs- und Teilungsabweichungen dadurch ausgeglichen werden, daß die fehlerhaften Stellen infolge Materialüberlastung nachgeben können. Dadurch können sich die Zahnflanken von Welle und Nabe aneinander anpassen. Die Zahnlücke im Nabengrund wird ohne Profilmodifikation breiter als bisher. Dadurch werden Eingriffsstörungen mit der Welle vermieden, und die Verbindung kann leichter als "Außenzentrierung" gestaltet werden.

Wird eine Welle mit herkömmlicher Verzahnung verwendet, beispielsweise mit Evolventenprofil, so ist es zweckmäßig, wenn die Zahnflanken der Zähne der Nabe im querschnitt konvex gekrümmt sind. In diesem Fall treffen je zwei konvex gekrümmte Zahnflanken aufeinander, die sich günstig aneinander anpassen können.

Die Form der Krümmung der Zahnflanken läßt sich geometrisch sehr einfach als Kreisbogenabschnitt ausführen.

Der Mittelpunkt der Krümmung der Zahnflanken der Nabenzähne liegt auf der Normalen, die durch den Berührpunkt zwischen den Zahnflanken von Welle und Nabe verläuft. Wird zur indirekten Prüfung der Nabenzahndicke ein Meßstück (z. B. Meßdraht oder Kugel) verwendet und die Größe des Meßstückes so festgelegt, daß sein Mittelpunkt ebenfalls auf der Normalen liegt, ist eine präzise Abstimmung der Nabenzahndicke auf die Wellenzahndicke möglich, weil der Berührpunkt zwischen Meßstück und Nabenzahnflanke mit dem Berührpunkt zwischen Wellenzahnflanke und Nabenzahnflanke zusammenfällt.

Im folgenden wird die Erfindung anhand eines in der Zeichnung dargestellten Ausführungsbeispieles näher erläutert. Es zeigt
- Fig. 1: einen Teilquerschnitt durch die erfindungsgemäße Zahnverbindung,
- Fig. 2: eine Variante der Zahnflankenkrümmung.

Eine Welle 1 trägt an ihrer Außen-Umfangsfläche Zähne 2, deren Flanken 3 beispielsweise die Form einer Evolvente aufweisen.

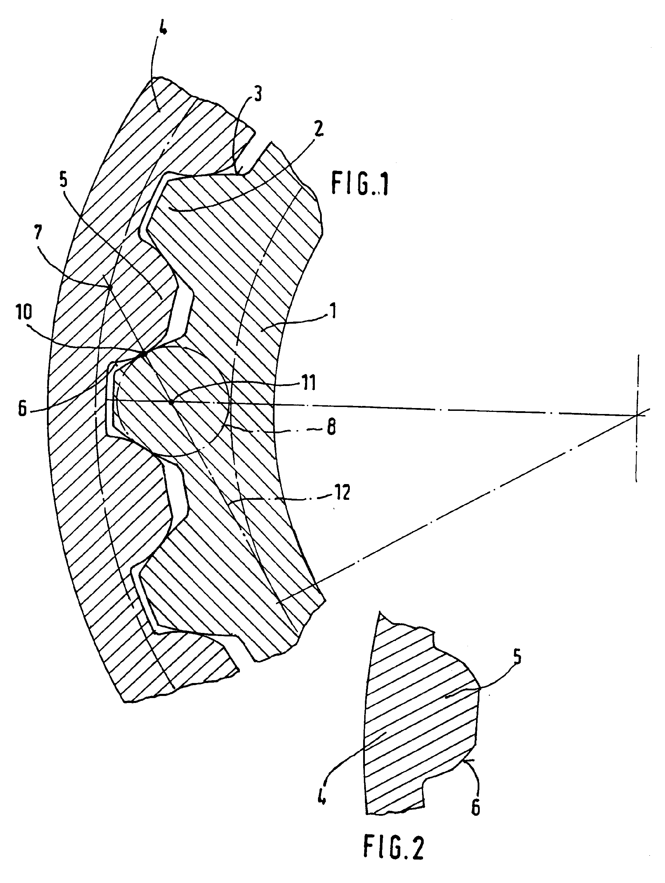

Eine Nabe 4 weist an ihrer Innen-Umfangsfläche Zähne 5 auf. Die Zahnflanken 6 der Zähne 5 der Nabe 4 weisen im Querschnitt eine konvex gekrümmte Form auf. Wird die Verzahnung der Nabe beispielsweise durch Räumen, Sintern oder ein anderes Form-Verfahren hergestellt, so ist es zweckmäßig, wenn die Krümmung der Zahnflanken 6 als Kreisbogenabschnitt ausgeführt ist oder wenn die Zahnflanken 6 in ihrer Krümmung wenigstens eine Unstetigkeitsstelle aufweisen. Dies bedeutet, daß die konvexe Krümmung an wenigstens einer Stelle einen Knick aufweist, wie dies in Fig. 2 dargestellt ist. Wird die Verzahnung der Nabe 4 dagegen durch ein Wälzverfahren hergestellt, so ist es ausreichend (der Wälzkinematik entsprechend), wenn die Krümmung der Zahnflanken 6 als angenäherter Kreisbogenabschnitt ausgeführt ist. Der kreisbogenförmige Abschnitt der Zahnflanke 6 besitzt einen Mittelpunkt 7.

Zur Messung der Verzahnung der Zahnverbindung kann ein Meßstück 8 mit kreisförmigem Querschnitt verwendet werden. Ein solches Meßstück kann beispielsweise eine Kugel oder ein Meßdraht sein.

Vorteilhaft ist es, wenn - in der Zeichnungsebene der Fig. 1 gesehen - der Mittelpunkt 7 der kreisbogenförmig gekrümmten Zahnflanke 6, der Berührpunkt 10 zwischen einem Zahn 2 der Welle 1 und einem Zahn 5 der Nabe 4 und der Mittelpunkt 11 des Meßstücks 8 auf einer Geraden, der Normalen 12, liegen. Dadurch kann die Zahndicke der Zähne 5 der Nabe 4 exakt auf diejenige der Zähne 2 der Welle 1 abgestimmt werden. Der Berührpunkt 10 wird vorzugsweise in die radiale Profilmitte gelegt.

Bei der Montage der Zahnverbindung wird das an manchen Zähnen 2, 5 zuviel vorhandene Material (= Summe aus Übermaß und Verzahnungsabweichungen) an den Berührpunkten, d. h. örtlich abgeplattet, so daß insgesamt eine Preßverbindung mit hoher Paßgenauigkeit entsteht.

Bei Naben mit ungleichem Querschnitt können die Zahnflanken 6 der einzelnen Zähne in ihrer Form und/oder Krümmung unterschiedlich ausgeführt werden. Dadurch wird eine ungleichmäßige Überdehnung der Nabe 4 verhindert.

### Bezugszeichen

- 1: Welle
- 2: Zahn
- 3: Zahnflanke
- 4: Nabe
- 5: Zahn
- 6: Zahnflanke
- 7: Mittelpunkt
- 8: Meßstück
- 9: -
- 10: Berührpunkt
- 11: Mittelpunkt
- 12: Normale

## Patentansprüche

1. Zahnverbindung mit Preßpassung zwischen einer Welle (1) und einer Nabe (4) mit einer Vielzahl von Zähnen (2, 5), die an einer Außen-Umfangsfläche der Welle (1) und an einer Innen-Umfangsfläche der Nabe (4) ausgebildet sind, dadurch **gekennzeichnet,** daß die Zahnflanken (3, 6) der Zähne (2, 5) von Welle (1) und Nabe (4) derart unterschiedlich gekrümmt sind, daß sie - bezogen auf eine Schnittebene senkrecht zur Achse von Welle (1) und Nabe (4) - nur in einem Berührpunkt (10) bzw. nur in einer bei der Pressung durch Abplattung entstehenden Berührfläche aneinander anliegen und ansonsten die Zahnflanken (3) der Zähne (2) der Welle (1) zu den Zahnflanken (6) der Zähne (5) der Nabe (4) über die Zahnhöhe unterschiedliche Abstände aufweisen.

2. Zahnverbindung nach Anspruch 1, dadurch **gekennzeichnet,** daß die Zahnflachen (6) der Zähne (5) der Nabe (4) im Querschnitt konvex gekrümmt sind.

3. Zahnverbindung nach Anspruch 2, dadurch **gekennzeichnet,** daß die Krümmung der Zahnflanken (6) als Kreisbogenabschnitt ausgeführt ist.

4. Zahnverbindung nach Anspruch 3, dadurch **gekennzeichnet,** daß der Mittelpunkt (7) der Krümmung der Zahnflanken (6) zusammen mit dem Berührpunkt (10) zwischen den Zähnen (2, 5), der Nabe (4) und der Welle (1) und mit dem Mittelpunkt (11) eines mit kreisförmigem Querschnitt ausgeführten Meßstücks (8) auf einer gemeinsamen Geraden (Normale 12) liegt, wobei das Meßstück (8) die Zähne (5) der Nabe (4) in dem Berührpunkt (10) berührt.

5. Zahnverbindung nach Anspruch 2, dadurch **gekennzeichnet,** daß Zahnflanken (6) in ihrer Krümmung wenigstens eine Unstetigkeitsstelle aufweisen.

6. Zahnverbindung nach einem der Ansprüche 2 oder 5, dadurch **gekennzeichnet,** daß die Zahnflanken (6) in ihrer Form und/oder Krümmung unterschiedlich ausgeführt sind.

## Claims

1. Press-fit toothed connection between a shaft (1) and a hub (4), having a plurality of teeth (2, 5) which are constructed at an external peripheral surface of the shaft (1) and at an internal peripheral surface of the hub (4), characterized in that the flanks (3, 6) of the teeth (2, 5) of shaft (1) and hub (4) differ in their curvature in such a way that - in relation to a cutting plane perpendicular to the axis of shaft (1) and hub (4) - they lie adjacent to one another only at a contact point (10) or only at a contact surface arising during pressing as a result of flattening and otherwise the flanks (3) of the teeth (2) of the shaft (1) are at distances from the flanks (6) of the teeth (5) of the hub (4) which differ over the tooth depth.

2. Toothed connection according to claim 1, characterized in that the flanks (6) of the teeth (5) of the hub (4) are, in cross-section, curved in a convex manner.

3. Toothed connection according to claim 2, characterized in that the curvature of the tooth flanks (6) takes the form of part of a circular arc.

4. Toothed connection according to claim 3, characterized in that the centre point (7) of the curvature of the tooth flanks (6), together with the contact point (10) between the teeth (2, 5) of the hub (4) and the shaft (1) and with the centre point (11) of a measuring piece (8) designed with a circular cross-section, lie along a common straight line (normal line 12), the measuring piece (8) touching the teeth (5) of the hub (4) at the contact point (10).

5. Toothed connection according to claim 2, characterized in that tooth flanks (6) have at least one discontinuous point in their curvature.

6. Toothed connection according to one of claims 2 or 5, characterized in that the tooth flanks (6) are designed so as to differ in their shape and/or curvature.

## Revendications

1. Raccordement cannelé à ajustement pressé entre un arbre (1) et un moyeu (4), comportant une pluralité de dents (2, 5) qui sont formées sur une surface périphérique extérieure de l'arbre (1) et sur une surface périphérique intérieure du moyeu (4), caractérisé en ce que les flancs (3, 6) des dents (2, 5) de l'arbre (1) et du moyeu (4) ont des courbures différentes, de sorte qu'ils ne se touchent - selon une vue en coupe perpendiculaire à l'axe de l'arbre (1) et du moyeu (4) - que sur un point de contact (10) ou sur une surface de contact créée par aplatissement lors du pressage, et en ce que, par ailleurs, les flancs (3) des dents (2) de l'arbre (1) présentent des écarts variables sur la hauteur des dents par rapport aux flancs (6) des dents (5) du moyeu (4).

2. Raccordement cannelé selon la revendication 1, caractérisé en ce que les flancs (6) des dents (5) du moyeu (4) ont une courbure convexe en coupe transversale.

3. Raccordement cannelé selon la revendication 2, caractérisé en ce que la courbure desdits flancs (6) est réalisée en arc de cercle.

4. Raccordement cannelé selon la revendication 3, caractérisé en ce que le centre de courbure (7) desdits flancs (6) se trouve sur une même droite (normale 12) que le point de contact (10) entre les dents (2, 5) du moyeu (4) et de l'arbre (1) et le centre (11) d'une pièce de mesurage (8) à section circulaire, cette pièce de mesurage (8) touchant les dents (5) du moyeu (4) au point de contact (10).

5. Raccordement cannelé selon la revendication 2, caractérisé en ce que lesdits flancs (6) présentent au moins un point de discontinuité dans leur courbure.

6. Raccordement cannelé selon la revendication 2 ou 5, caractérisé en ce que lesdits flancs (6) sont réalisés différemment quant à leur forme et/ou courbure.
